(19) Europäisches Patentamt

European Patent Office

Office européen des brevets

(11) EP 0 882 401 A1

(12) EUROPEAN PATENT APPLICATION

(43) Date of publication:
09.12.1998 Bulletin 1998/50

(51) Int Cl.6: **A21D 10/00**, A21D 2/02, A21D 2/16

(21) Application number: 98201338.5

(22) Date of filing: 24.04.1998

(84) Designated Contracting States:
AT BE CH CY DE DK ES FI FR GB GR IE IT LI LU MC NL PT SE
Designated Extension States:
AL LT LV MK RO SI

(30) Priority: 24.04.1997 EP 97201231

(71) Applicant: GIST-BROCADES B.V.
2600 MA Delft (NL)

(72) Inventor: Rodiguez, Javier
08820 El Pratt De Llobregat (ES)

(74) Representative:
Matulewicz, Emil Rudolf Antonius, Dr. et al
Gist-Brocades BV
Patents and Trademarks Department
Wateringseweg 1
P.O. Box 1
2600 MA Delft (NL)

(54) **Leavening compositions**

(57) A composition which when baked into a product is capable of causing leavening said composition comprising a leavening system and at least one lipid or lipid related compound and being characterised in that it is in the form of a paste.

## Description

The present invention relates to a composition which when baked into a food product is capable of causing leavening.

Food products such as baked goods require a proper leavening to give a light porous texture. In the absence of any leavening, the baked goods would remain flat, have a dense crumb and inadequate distribution of moisture.

The leavening of food products such as baked goods generally improves eating pleasure and digestibility. In general a reaction between an acid and a carbon dioxide producing agent will occur during the baking process:

$$HX + NaHCO_3 \rightarrow NaX + H_2O + CO_2$$

In this case an acid or acidic salt reacts with sodium bicarbonate to produce carbon dioxide.

The present invention provides for a composition in the form of a paste which when baked into a food product is capable of causing leavening of that product.

A paste is a suspension of solid particles in a liquid phase, wherein the particles touch each other and so form a network throughout the whole liquid. The paste according to the present invention has a solid appearance, has a non-newtonian flow behavior of which shear stress is not proportional to shear rate and shows a yield stress (Bingham plastic behavior). Reference is made to "Dry Solids, Paste and Dough Mixing Equipment" by the Equipment Testing Procedures Committee, AIChE Equipment Testing Procedure (1979). In contrast with dough, the paste lacks elastic flow properties.

The composition comprises a leavening system and at least one lipid or lipid related product which is preferably an oil, fat or fat related compound such as hydrogenated or partly hydrogenated oil, emulsifier, fat hydrolysis product or esters and ethers thereof or combinations thereof. The leavening system preferably comprises a leavening acid and a carbonate compound.

By a leavening acid is meant a compound which is capable of generating acid in an uncooked or partially cooked food product for example batter or dough, or during baking of an uncooked or partially cooked food product, which acid formation results in $CO_2$ production by reaction with a carbonate compound.

Suitable leavening acids are for example sodium acid pyrophosphate, citric acid, monocalcium phosphate, sodium aluminium phosphate, cream of tartar, glucono-delta-lactone or tartaric acid. Suitable carbonate compounds are for example sodium bicarbonate or potassium bicarbonate.

The composition comprises preferably from about 1 part by weight of oil, fat or fat related compounds or combinations thereof on 0.6 to 4 parts of the leavening system.

Preferably from about 1 part by weight of oil, fat or fat related compounds or combinations thereof on 0.8 to 2 parts of the leavening system.

The ratio on molar basis between leavening acid and carbonate is from about 1 part of acid on 0.6 to 1.1 parts of carbonate, preferably 1 part of acid on 0.8 to 1 parts of carbonate.

The composition in paste form has the advantage that it can be used (e.g. dosed) easily and it provides a more homogeneous distribution of the leavening agent in an uncooked or partially cooked product. In comparison with conventional formulations of leavening agents, the leavening agent according to the invention, which is covered by fat, inhibits gas release until the uncooked or partially cooked food product is heated in an oven, and thereby results in baked products having better texture.

Also due to the paste form the use of the composition of the invention may overcome the dust-formation problems encountered when using leavening agents of the prior art.

The composition may preferably further comprise compounds which when baked in a food product extend texture shelf life of the baked product. Such compounds are for example sorbitol, glycerol, propylene glycol, sugars e.g. glucose or fructose, or hydrocolloids such as xanthan gum, alginate or carboxymethylcelluloses. These compounds may be added in an amount of from about 2 to 30%, preferably 10 to 25% by weight of the total composition. The addition of these compounds to the composition may enhance the water retention, colour, taste and texture qualities of the final baked product.

The composition may further comprise colour and taste additives such as for example lemon aroma or any other aroma, or yellow or white colour or any other colour additive used in the baking art. Colour and taste additives may be added in amounts of about 0 to 2% by weight of the total composition.

The composition may also comprise anti-mould agents.

The novel composition in paste form may be prepared by mixing a leavening acid and a carbonate compound into a lipid or lipid related compound . Preferably any lipids such as fat are in liquid form or are oils.

Preferably, dry ingredients are used and the water content of the leavening composition is below 2% by weight, more preferably below 1% by weight.

Mixing may be done in any conventional mixing apparatus known in the art. During mixing of the carbonate compound the temperature in general is advantageously maintained below 50°C, preferably between 38 and 50°C.

Other components which may be added to the composition, such as colour and/or taste additives, compounds that extend texture shelf life, anti-mould agents, may be added to the fat or oil in any order, that is before, during or after addition of the leavening acid and/or carbonate compound.

The final composition is preferably packaged in plastic bags or pails, in amounts of 1-25 kg.

The composition does not lose its effectiveness during storage and preferably has a shelf life of over 5 months, when kept in a dry place at about 10 to 25°C.

Compositions of the invention are in paste form, preferably at temperatures of about 5-40°C the leavening composition is in a paste form, which is easily handled by the user. Below 5°C it is possible that the composition may become too hard. At high temperatures it is possible that the composition may become too fluid. Preferred compositions use a combination of ingredients that provide a soft paste at application temperatures of 10 to 30°C.

One physical parameter of the paste is the hardness of the paste. Hardness of the paste can be measured by using a Texture Analyser of Stable Micro systems model TA.XT2. Measurements at ambient temperature (about 20°C were made by using the cylinder probe with diameter 20 mm. This probe was used at a speed of 2 mm/s until 30 mm has been reached. Then it returns to the start position. The TA.XT2 measured the forces that were placed on the probe. The highest force value of the measurement is a measure of the hardness of the paste. The paste according to the invention has a hardness of about 500 gram to 1500 gram, preferably from about 700 gram to 1200 gram, more preferably from 800 gram to 1000 gram.

The novel leavening composition may be used in the production of batter or dough for baked goods such as Muffins, Sponge or other cakes, Swiss rolls, Cookies etc. Batters or doughs for example for cakes or cookies can be prepared by known procedures, the novel leavening composition being used instead of prior known leavening compositions.

Baked goods, preferably cakes or cookies, can be prepared from batter or dough comprising the novel leavening composition in manners known for the production of these baked products per se.

## Example 1

26 kg of palm fat (with a melting point of 38°C) was heated to 53°C and added to a mixer. 8 kg vegetable oil also of 53°C was added to the palm fat.

The following were added to the oil/fat mixture:

| 0.2 kg | lemon aroma |
|---|---|
| 5 kg fructose | |
| 4 kg | sorbitol |
| 3 kg | dextrose (anhydrous) |
| 25 kg | sodium acid pyrophosphate |
| 18 kg | sodium bicarbonate |
| 11 kg | glucose (anhydrous) |

Before sodium bicarbonate was added the temperature was decreased to below 50°C. The temperature of the final mixture was between 43 and 45°C.

The product was packaged and stored dry at 20°C. The hardness of the paste was measured at about 20°C using a Texture Analyser of Stable Micro systems model TA.XT2, with the following parameters: cylinder probe diameter: 20 mm; speed 2 mm/s; distance 30 mm. The hardness of the paste was 900 gram.

## Example 2

A so-called 'Bizcocho para tartas' was prepared using the product of Example 1.

| Eggs | 2250 gram |
|---|---|
| Sugar | 1350 gram |
| Emulsifier | 90 gram |
| Flour | 1500 gram |
| Product of Example 1 | 60 gram |

The eggs, emulsifier and sugar were well mixed in one minute. The other ingredients, including the Product of Example 1, were added under mixing at high speed. Baking forms were filled and baking was performed at moderate baking temperature.

A "Bizcocho para tartas" with improved texture and taste was obtained.

## Example 3

A so-called 'Magdalena cuadrada' was prepared using the product of Example 1.

| Eggs | 700 gram |
|---|---|
| Sugar | 1085 gram |
| Milk | 650 gram |
| Oil | 900 gram |
| Flour | 1325 gram |
| Product of Example 1 | 70 gram |

The eggs and sugar were mixed at high speed for 5 minutes. Milk, oil and the product of Example 1 were added slowly under mild mixing conditions. Under high speed mixing conditions, the sieved flour was added in 2 to 3 minutes. After resting for about 20 minutes, the batter was put into baking forms, and baked. A "Magdalena cuadrada" with improved texture and taste was obtained.

## Example 4

A so-called 'Plancha de Bizcocho' was prepared using the product of Example 1.

| Eggs | 1600 gram |
|---|---|

(continued)

| Sugar | 945 gram |
|---|---|
| Water | 125 gram |
| Emulsifier | 70 gram |
| Flour | 1000 gram |
| Product of Example 1 | 40 gram |

All the ingredients except the flour, were slowly mixed together in one minute. The flour was added during about 1 minute at high speed mixing. The batter was put in baking forms and baked in a hot oven. A "Plancha de Bizcocho" with improved texture and taste was obtained.

**Claims**

1. A composition comprising a leavening system and at least one lipid or lipid related compound, characterised in that the composition is in the form of a paste.

2. A composition according to claim 1, wherein the ratio of the amount of lipid or lipid related compound to leavening system in parts by weight is from 5:3 to 1:4, preferably from 5:4 to 1:2.

3. A composition according to claim 1 or claim 2, wherein the leavening system comprises one or more leavening acids preferably selected from sodium acid pyrophosphate, citric acid, monocalcium phosphate, sodium aluminium phosphate, cream of tartar, glucono-delta-lactone and tartaric acid and one or more carbonate compounds, preferably selected from sodium bicarbonate and potassium bicarbonate.

4. A composition according to claim 3, wherein the molar ratio of leavening acid to carbonate compound in the leavening system is from 5:3 to 10:11, preferably from 5:4 to 1:1.

5. A composition according to any one of the preceding claims, wherein at least one lipid or lipid related compound is a fat, oil or fat related compound, preferably selected from hydrogenated or partly hydrogenated oils, emulsifiers, fat hydrolysis products, esters of fat hydrolysis products and ethers of fat hydrolysis products.

6. A composition according to any one of the preceding claims, which further comprises a compound which when baked in a product is capable of extending the texture shelf life of the baked product, preferably the product capable of extending the texture shelf life is selected from sorbitol, glycerol, propylene glycol, a sugar or a hydrocolloid.

7. A composition according to claim 6, wherein the compound which when baked in a product is capable of extending the texture shelf life of the baked product is present in an amount of 2 to 30% by weight of the total composition.

8. An uncooked or partially cooked food product comprising or having admixed therein a composition as claimed in any one of claims 1 to 7.

9. A batter or dough comprising or having admixed therein a composition as claimed in any one of claims 1 to 7.

10. A baked product, obtainable by baking an uncooked or partially cooked food product as claimed in claim 8 or a batter or dough as claimed in claim 9.

11. Use of a composition as claimed in any one of claims 1 to 7, as a leavening agent in baking.

12. A process for the production of a leavening agent in the form of a paste, the process comprising mixing one or more leavening acids and one or more carbonate compounds in at least one lipid or lipid related compound.

13. A process for the production of baked products, the process comprising baking an uncooked or partially cooked food product as claimed in claim 8 or a batter or dough as claimed in claim 9.

14. A process for the production of an uncooked or partially cooked food product, the process comprising admixing a composition as claimed in any one of claims 1 to 7 with any edible ingredient.

**European Patent Office**

**EUROPEAN SEARCH REPORT**

Application Number

EP 98 20 1338

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 676 142 A (GIST BROCADES BV) 11 October 1995 * page 3, line 38 - page 4, line 57 * | 1-14 | A21D10/00 A21D2/02 A21D2/16 |
| A | EP 0 650 669 A (GIST BROCADES BV) 3 May 1995 * column 2, line 14 - column 4, line 13 * | 1-14 | |
| A | US 5 153 018 A (LAJOIE M STEPHEN ET AL) 6 October 1992 | | |
| A | US 4 141 998 A (ZIEMKE WILLIAM H ET AL) 27 February 1979 | | |
| A | PATENT ABSTRACTS OF JAPAN vol. 011, no. 353 (C-457), 18 November 1987 & JP 62 126968 A (TOYO JOZO CO LTD), 9 June 1987 * abstract * | | |
| A | GB 2 254 993 A (RIKEN VITAMIN CO) 28 October 1992 | | TECHNICAL FIELDS SEARCHED (Int.Cl.6) A21D |

The present search report has been drawn up for all claims

| Place of search | Date of completion of the search | Examiner |
|---|---|---|
| THE HAGUE | 5 October 1998 | Bevan, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)